# EUROPEAN PATENT APPLICATION

(11) **EP 3 158 971 A1**
(43) Date of publication of application: **26.04.2017**
(21) Application number: 15810045.3
(22) Date of filing: 20.06.2015
(51) Int. Cl.: A61C 13/34, A61C 13/38

(54) **TABLE FOR 3D SCANNING OF TOOTH STRUCTURE MODEL**

(30) Priority: 21.06.2014 KR 20140076148
(71) Applicant: Dof Inc., Seodaemun-gu 120-839 Seoul (KR)
(72) Inventor: SIM, Heungsik, Incheon 405-837 (KR); KIM, Dongmin, Goyang-si Gyeonggi-do 410-784 (KR)
(74) Representative: Zardi, Marco
(86) International application number: PCT/KR2015/006270
(87) International publication number: WO 2015/194914

(57) **Abstract**

Provided is a table for three-dimensional (3D)-scanning of a dental model, and more particularly, a table for 3D-scanning of a dental mode, for simultaneously 3D-scanning a dental model while placing a maxillary dental model, a mandibular dental model, and a partial dental model separated therefrom at the same time. The table includes a first arrangement portion for placing a maxillary dental model thereon, a second arrangement portion for a mandibular dental model thereon, and a third arrangement portion disposed between the first arrangement portion and the second arrangement portion and for placing thereon a partial dental model separated from the maxillary dental model or the mandibular dental model.

## Description

### CROSS-REFERENCE TO RELATED APPLICATIONS

This application claims priority from Korean Patent Application No. 10-2014-0076148, filed on June 21, 2014, in the Korean Intellectual Property Office, the disclosure of which is incorporated herein by reference in its entirety.

### BACKGROUND OF THE INVENTION

### Field of the Invention

The present invention relates to a table for three-dimensional (3D)-scanning of a dental model, and more particularly, to a table for 3D-scanning of a dental mode, for simultaneously 3D-scanning a dental model while placing a maxillary dental model, a mandibular dental model, and a partial dental model separated therefrom at the same time.

### Description of the Related Art

When a tooth is lost for the reason such as dental caries, gum disease, injury, or the like, the lost tooth is recovered with an artificial material so as to normally restore the reduced function, outer appearance, pronunciation, and so on. In this regard, this treatment process is referred to as prosthetics.

The case of defect teeth recovered via prosthetics will now be described. One or more teeth may not be wholly present or a portion of one tooth may not be present.

Various prosthetics methods are used according to a tooth defect type. For example, when all teeth are lost, a full denture is used, and when a plurality of teeth is lost and a few teeth are present, a partial denture is used.

When a few teeth are lost, a plurality of teeth is replaced with a bridge. Here, the bridge refers to a dental replacement attached to a natural tooth. When only one tooth is lost, the lost tooth is recovered with simple crown as a dental replacement.

Recently, a dental implant surgery has been widely used to prevent neighbor teeth from being damaged when one or more teeth are not present, unlike in a bridge treatment.

As described above, overall prosthetics methods are different according to a tooth defect type. However, the prosthetics methods have approximately similar procedures for manufacturing a dental model by a dental technician.

For example, a treatment procedure for the case in which a tooth is partially damaged will now be described. First, the tooth is wholly removed by 1 to 1.5 millimeters and then tooth impression tray is molded.

Then a dental technician pours gypsum into the tooth impression tray to prepare a mold and then prepares a crown based on the mold. When only a little portion of tooth is present due to dental caries or odontoclasis, crown is manufactured by forming a post into a tooth root and forming an artificial tooth, i.e., a core, and in this case, the crown is also manufactured in the same manner as the aforementioned method.

The work of a dental technician is a simple manual work and takes a long time period to process one artificial tooth, e.g., crown, and thus productivity of the work is very low. Accordingly, in order to increase the work efficiency of the work of the dental technician, there is a need for automation of extracting the feature of a tooth shape and processing a tooth.

Among these, for extracting the feature of a tooth shape, use of a three-dimensional (3D) input device may be considered.

In general, a conventional 3D input device employs a method of photographing an object via a charge coupled device (CCD) and extracting a 3D shape from an image captured via software. An example of the 3D input device is disclosed in Korean patent publication No. 1993-6430 (Title of Invention: Method of Inputting 3D Shape using Camera and Automatic Input System using the same) applied on September 6, 1991 and published on April 21, 1993.

However, it is disadvantageous, when a 3D shape is extracted using only an image captured via one camera, the precision of the shape is very low, and thus the practicality is low.

In order to overcome this disadvantage, a method using a plurality of cameras has been used. For example, Korean patent publication No. 2000-466 (Title of Invention: 3D digital input device) applied on October 22, 1999 and published on January 15, 2000 proposes an apparatus for capturing a lateral image and an upper image via a plurality of CCDs and synthesizing the images to acquire stereoscopic image data.

However, in such a photograph method, photograph or scanning needs to be performed one by one instead of simultaneously on a maxillary dental model, a mandibular dental model, and a partial dental model as a treatment target.

This causes a serious loss in terms of time and causes inconvenience of changing subjects one by one in terms of a worker.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a table for three-dimensional (3D)-scanning of a dental model, for simultaneously 3D scanning a maxillary dental model, a mandibular dental model, and a partial dental model separated therefrom while placing them on one table in order to overcome inconvenience of separately scanning the maxillary dental model, the mandibular dental model, and the partial dental model separated therefrom.

According to an aspect of the present invention, a table for three-dimensional (3D)-scanning of a dental model, the table including a first arrangement portion for placing a maxillary dental model thereon, a second arrangement portion for a mandibular dental model thereon, and a third arrangement portion disposed between the first arrangement portion and the second arrangement portion and for placing thereon a partial dental model separated from the maxillary dental model or the mandibular dental model.

The third arrangement portion may be formed to a greater height than the first arrangement portion and the second arrangement portion.

The third arrangement portion may protrude in an upward direction and may be formed to a step difference with a straight line shape.

The table may further include a fixing portion formed in the third arrangement portion, with a fixing pin formed in the partial dental model being inserted into and fixed to the fixing potion.

The fixing portion may include a hole formed to a predetermined depth in the third arrangement portion, and a filler filled in the hole, with the fixing pin being inserted into and fixed to the filler.

The fixing portion may include a 3D coordinate recognition identifying target provided on a surface of the third arrangement portion.

### BRIEF DESCRIPTION OF THE DRAWING FIGURES

The above and/or other aspects of the present invention will be more apparent by describing certain exemplary embodiments of the present invention with reference to the accompanying drawings, in which:
FIGS. 1 is a perspective view of a table for scanning a dental model according to an embodiment of the present invention;
FIG. 2 is a diagram illustrating a state in which dental models are arranged on a table for scanning a dental model;
FIG. 3 is a diagram illustrating a state for scanning each dental model;
FIG. 4 is a diagram illustrating stereoscopic image data of dental models, acquired through the scanning of FIG. 3;
FIG. 5 is a diagram illustrating a state for scanning an occlusion state of dental models;
FIG. 6 is a diagram illustrating stereoscopic image data of dental models, acquired through the scanning of FIG. 5;
FIG. 7 is a diagram illustrating point matching performed on a maxillary dental structure;
FIG. 8 is a diagram illustrating point matching performed on a mandibular dental structure;
FIG. 9 is a diagram illustrating point matching performed on a partial dental structure; and
FIG. 10 is a diagram illustrating stereoscopic image data of an inner part of an occlusion structure, acquired through a point matching operation.

### DETAILED DESCRIPTION OF THE EXEMPLARY EMBODIMENTS

The present invention will now be described more fully with reference to the accompanying drawings, in which exemplary embodiments of the invention are shown.

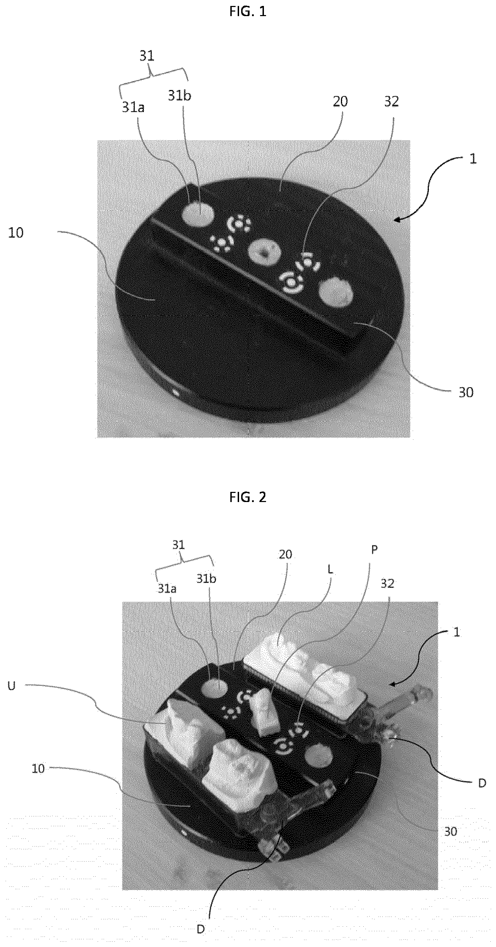

First, referring to FIG. 1, a table 1 (hereinafter, referred to as a 'table') for three-dimensional (3D)-scanning of a dental model will be described.

The table 1 is prepared as a disk type table with an approximate predetermined thickness.

The table 1 is divided into three portions and includes a first arrangement portion 10 on which a maxillary dental model is put, a second arrangement portion 20 on which a mandibular dental model is put, and a third arrangement portion 30 provided between the first and second arrangement portions 10 and 20.

When a prosthetics treatment is performed on a specific tooth position of a patient, a dental model of the corresponding position may be separated from the maxillary dental model or the mandibular dental model and put on the third arrangement portion 30.

The third arrangement portion 30 includes a fixing portion 31 for fixing the separated partial dental model.

In general, the partial dental model is coupled to the maxillary or mandibular dental model in the form of pin combination.

Accordingly, a pin is provided at a lower portion of the partial dental model and a pin hole into which the pin is coupled is formed in the maxillary or mandibular dental model.

The fixing portion 31 may include a ductile material such that the pin is inserted into and fixed to the fixing portion 31.

The configuration of the fixing portion 31 is now described and includes a hole 31a formed to a predetermined depth in the third arrangement portion 30 and a filler 31b filled in the hole 31a.

The filler 31b may be formed of silicon or other insulating materials and may be formed of a material that is so flexible that the fixing pin is easily inserted but has support capability so as to prevent the pin from being moved after being inserted.

At least one fixing portion 31 may be provided. However, a plurality of fixing portions 31 instead of one fixing portion may be used. This is because a treatment target corresponds to a plurality of partial dental models and the plurality of dental models needs to be simultaneously fixed and to be photographed at one time.

A 3D coordinate recognition identifying target 32 is disposed between the fixing portions 31. The 3D coordinate recognition identifying target 32 indicates a rotated position when the table 1 is rotated during a 3D scanning operation and also indicates a relative position between the maxillary dental model and the mandibular dental model.

As illustrated in FIG. 2, by virtue of the aforementioned table 1, a maxillary dental model U, a mandibular dental model L, and a separated partial dental model P may be arranged on the table 1 at one time.

Although FIG. 2 illustrates the case in which the partial dental model P is separated from the maxillary dental model U, embodiments of the present invention are not limited thereto, and the partial dental model P may be separated from the mandibular dental model L or separated from both the maxillary dental model U and the mandibular dental model L.

Hereinafter, a process for 3D-scanning to acquire 3D data by the table 1 according to an embodiment of the present invention will be described.

In FIG. 2, D indicates a die D on which each of the maxillary and mandibular dental models U and L are placed.

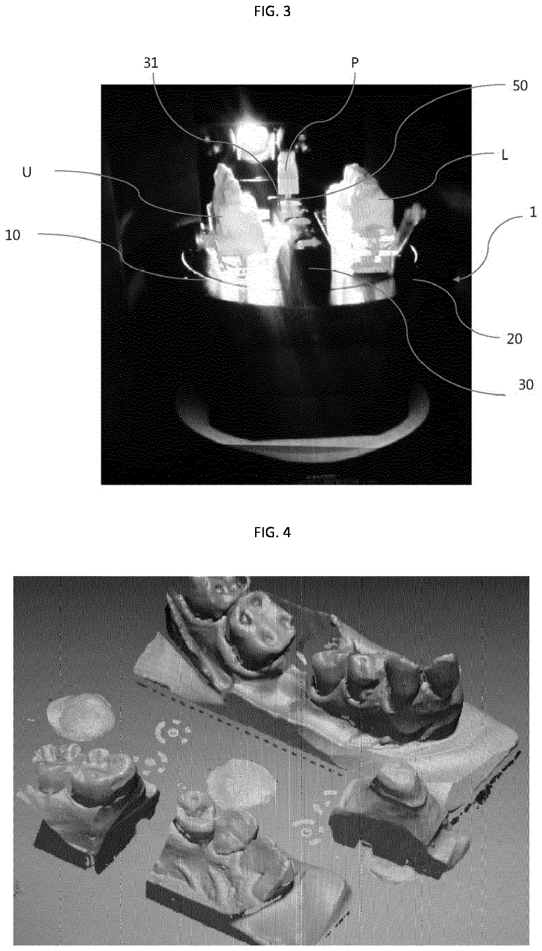

As illustrated in FIGS. 2 and 3, an operator places the maxillary dental model U coupled to the die D on the first arrangement portion 10, places the mandibular dental model L coupled to the die D on the second arrangement portion 20, places the partial dental model P on the third arrangement portion 30, positions the table 1 in a 3D scanner, and then begins a 3D scanning operation.

In this case, the table 1 is rotated in units of predetermined angles, and accordingly a camera C may simultaneously scan the maxillary dental model U, the mandibular dental model L, and the partial dental model P.

A pin 50 stuck in the fixing portion 31 is provided in the partial dental model P.

As illustrated in FIG. 4, respective stereoscopic-shape files of the maxillary dental model, the mandibular dental model, and the partial dental model may be generated via 3D scanning.

Before the table 1 according to an embodiment of the present invention is developed, a maxillary dental model, a mandibular dental model, and a partial dental model are placed one by one in a 3D scanner to acquire respective stereoscopic image items. Accordingly, it takes a long time period to acquire stereoscopic image data of each model.

However, stereoscopic image data of respective models may be acquired at one time using the table 1 according to an embodiment of the present invention.

The third arrangement portion 30 may be formed higher than the first and second arrangement portions 10 and 20 and formed with a step difference. For example, the third arrangement portion 30 may protrude by as much as a predetermined height from an upper surface of the table 1 and may be arranged to a straight line shape with a predetermined width.

As such, a camera of a scanner performs photograph in a downward direction while the third arrangement portion 30 protrudes with respect to the first and second arrangement portions 10 and 20, and when the table 1 is rotated in units of predetermined angles, the models do not overlap in the image. That is, overlapping regions may not be present.

The 3D scanner uses a principle whereby stereoscopic image data is acquired by repeatedly scanning a scanning target object placed on the table 1 several times or several tens of times to capture image data while rotating the table 1 and overlapping the captured image data, instead of scanning a stereoscopic structure only once like a two-dimensional (2D) image.

In this state, if the third arrangement portion 30 is not present, the separated dental model always hides the maxillary dental model U or the mandibular dental model L, and thus even if scanning is performed while rotating the table 1 a plurality of times, overlapping regions are present, and thus it is difficult to simultaneously acquire stereoscopic images of maxillary, mandibular, and partial dental models.

When the dental models are overlapped, it is very difficult to discover a reference point for matching between a separated structure and an occlusion structure of the dental models.

On the other hand, when the third arrangement portion 30 is formed higher than the first and second arrangement portions 10 and 20, stereoscopic image data of the respective dental models may be acquired so as not to be overlapped.

In addition, the partial dental model P is coupled to the maxillary or mandibular dental model, and a die with the maxillary dental model coupled thereto and the die D with the mandibular dental model fixed thereto are coupled to each other.

When the maxillary dental model U and the mandibular dental model L are coupled, the same structure of an occlusion structure of actual teeth may be acquired.

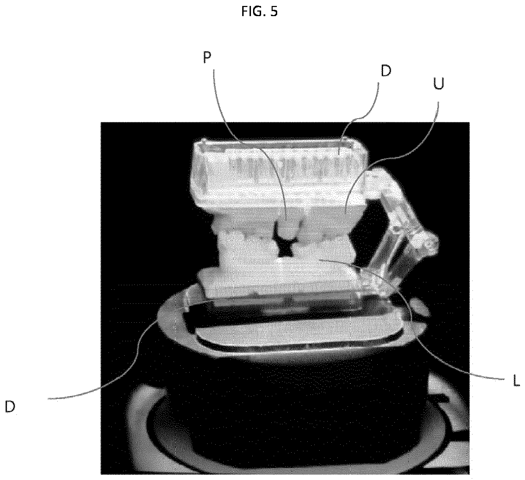

As illustrated in FIG. 5, while the occlusion structure of the models is placed on a photograph table, photograph is performed by a camera. In the state illustrated in FIG. 5, the occlusion structure is photographed while rotating the photograph table.

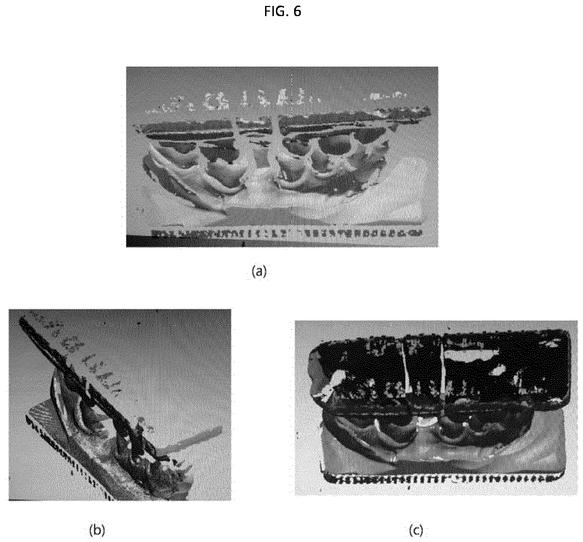

Then stereoscopic image data of the occlusion structure are acquired, as shown in FIGS. 6(A) to 6(C).

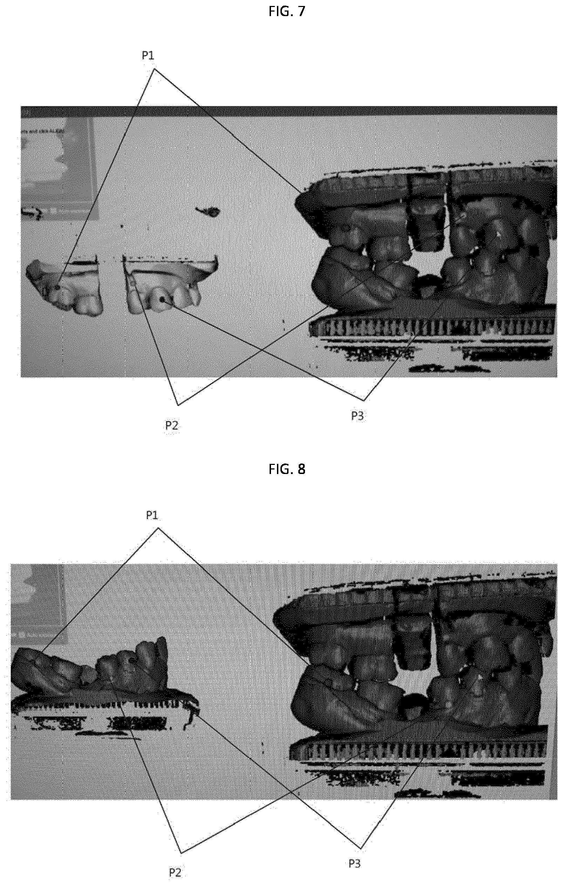

As illustrated in FIG. 7, the acquired stereoscopic image data of the occlusion structure and stereoscopic image data of the maxillary dental model (a mandibular dental model or a partial dental model) acquired with the table according to an embodiment of the present invention are placed on one screen.

As illustrated in FIG. 7, corresponding points P1, P2, and P3 are indicated on the stereoscopic image data of the maxillary dental model and the stereoscopic image data of the occlusion structure.

That is, three spaced points are indicated on the maxillary dental model, and three corresponding points are also indicated on a maxillary dental model of the occlusion structure.

This operation is defined as a point matching operation.

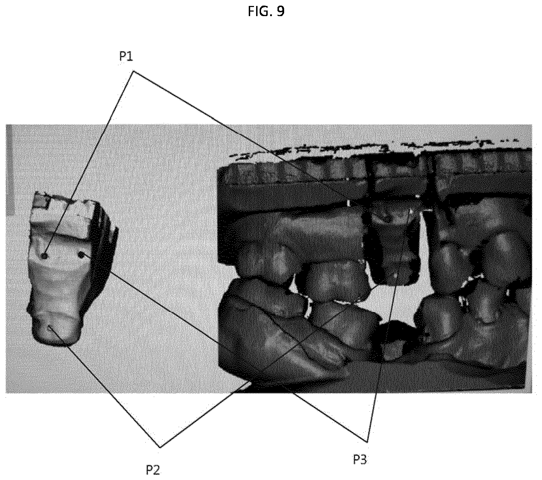

As illustrated in FIG. 8, the above point matching operation is also performed on the mandibular dental model and a mandibular dental model of the occlusion structure. As illustrated in FIG. 9, the point matching operation is also performed on the partial dental model and a partial dental model of the occlusion structure.

When the point matching operations performed in the processes of FIGS. 7 to 9 are completed, portions of the maxillary/mandibular/partial dental models constituting the stereoscopic image data of the occlusion structure may be replaced with the maxillary/mandibular/partial dental models acquired using the table according to an embodiment of the present invention.

The stereoscopic image data of the occlusion structure, acquired in FIG. 5 has only information about an outer appearance of the occlusion structure but does not have information about an inner part in an occlusion state.

However, perfect data substitution may be possible by performing the point matching operations and placing points indicated on the stereoscopic image data of the maxillary/mandibular/partial dental models obtained using the table 1 according to an embodiment of the present invention on points indicated on the stereoscopic image data of the maxillary/mandibular/partial dental models constituting the stereoscopic image data of the occlusion structure.

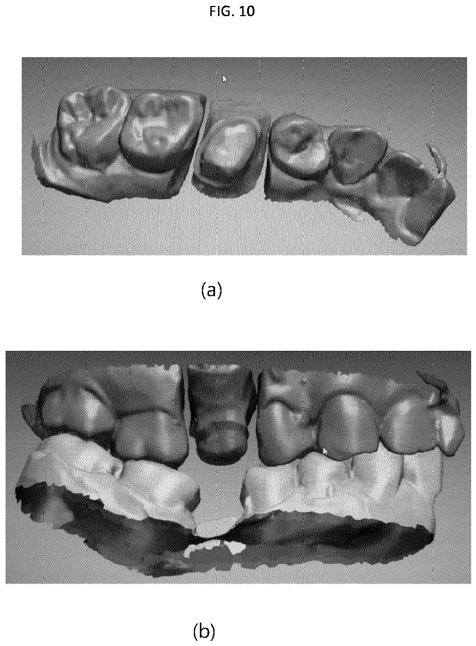

As illustrated in FIG. 10, information about a dental structure including an inner part thereof may be acquired in the occlusion state.

As such, it is advantageous to predict a dental structure with a prosthetics structure or to acquire an actual structure through a 3D printer based on the predicted dental structure.

When the aforementioned table for 3D-scanning of a dental model according to an embodiment of the present invention is used, respective stereoscopic image data of the maxillary dental model, the mandibular dental model, and the partial dental model may be placed on one table and may be simultaneously 3D-scanned to be acquired.

Accordingly, it is advantageous to remarkably reduce working time of an operator and to remarkably increase work efficiency.

In addition, it is also advantageous to easily differentiate simultaneously acquired stereoscopic image data of respective models by separately providing first, second, and third arrangement portions on which the maxillary dental model, the mandibular dental model, and the partial dental models are arranged, respectively.

## Claims

1. A table for three-dimensional (3D)-scanning of a dental model, the table comprising:
a first arrangement portion for placing a maxillary dental model thereon;
a second arrangement portion for a mandibular dental model thereon; and
a third arrangement portion disposed between the first arrangement portion and the second arrangement portion and for placing thereon a partial dental model separated from the maxillary dental model or the mandibular dental model.

2. The table according to claim 1, wherein the third arrangement portion is formed to a greater height than the first arrangement portion and the second arrangement portion.

3. The table according to claim 1, wherein the third arrangement portion protrudes in an upward direction and is formed to a step difference with a straight line shape.

4. The table according to claim 1, further comprising a fixing portion formed in the third arrangement portion, with a fixing pin formed in the partial dental model being inserted into and fixed to the fixing potion.

5. The table according to claim 4, wherein the fixing portion comprises:
a hole formed to a predetermined depth in the third arrangement portion; and
a filler filled in the hole, with the fixing pin being inserted into and fixed to the filler.

6. The table according to any one of claims 1 to 5, further comprising a 3D coordinate recognition identifying target provided on a surface of the third arrangement portion.
